# FASCICULE DE BREVET EUROPEEN

(11) **EP 0 687 582 B1**
(45) Date de publication et mention de la délivrance du brevet: **11.11.1998**
(21) Numéro de dépôt: 95107319.6
(22) Date de dépôt: 15.05.1995
(51) Int. Cl.: B60C 11/03

(54) **Bande de roulement pour pneumatique**
Reifenlauffläche
Tyre tread

(30) Priorité: 14.06.1994 FR 9407544
(43) Date de publication de la demande: 20.12.1995
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Aichele, Marc, F-63100 Clermont-Ferrand (FR); Deguin, Christian, F-63200 Riom (FR)
(74) Mandataire: Devaux, Edmond-Yves

(56) Documents cités:
- EP-A- 0 428 472
- EP-A- 0 578 216
- US-A- 3 768 535
- PATENT ABSTRACTS OF JAPAN vol. 16, no. 523 (M-1331) 27 Octobre 1992 & JP-A-04 193 610 (BRIDGESTONE CORP.) 13 Juillet 1992

## Description

La présente invention concerne une bande de roulement pour pneumatique de tourisme, destiné à rouler à grande vitesse de manière soutenue.

Pour satisfaire les excellentes propriétés d' adhérence requises sur route sèche aussi bien que sur route mouillée, la bande de roulement d'un tel pneumatique comporte généralement plusieurs rainures circonférentielles, soit rectilignes, soit en zigzag, délimitant entre elles des nervures. Lesdites nervures peuvent être, du moins certaines, subdivisées en blocs au moyen de rainures et/ou d' incisions transversales.

Le nombre important de rainures et par suite de blocs de la bande de roulement, et bien que le rapport entre la surface portante du pneumatique sur le sol et la surface totale de l'ellipse de contact du pneumatique avec le sol soit ajustée au mieux pour obtenir le meilleur compromis de propriétés, influe défavorablement sur la rigidité des blocs de gomme vis à vis des efforts imposés lors du roulage, ce qui ne permet pas l'amélioration des propriétés de comportement d'un pneumatique compte tenu des autres propriétés désirées.

L'invention a pour objet un pneumatique présentant une bande de roulement asymétrique, le montage de quatre desdits pneumatiques sur un véhicule permettant l'amélioration du comportement en virage dudit véhicule, que ce soit sur route sèche ou sur route mouillée.

De nombreuses demandes de brevet sont relatives à des asymétries de bande de roulement. L'asymétrie peut être conférée à ladite bande par des caractéristiques simples. La demande japonaise 04/193610, en vue d'obtenir une forte tenue de route tout en conservant d'excellentes propriétés de drainage, propose de diminuer progressivement la profondeur des rainures longitudinales de la bande de roulement en allant d'un bord à l'autre bord de ladite bande de roulement. Pour résoudre des problèmes d'usure de bande de roulement, on peut agir sur les rayons de courbure des deux demi-bandes de roulement, en combinaison ou non avec d'autres caractéristiques, comme dans la demande JP63/17102 qui associe auxdits rayons le désaxage d'une nappe d'armature de sommet. Les demandes JP61/16110, JP61/9315, JP57/4409 concernent plus particulièrement les rainures circonférentielles d'une bande de roulement, pour lesquelles il est possible, dans le but de remédier à des usures anormales, de modifier l'amplitude des zigzag formant lesdites rainures, ou de modifier la largeur des nervures disposées entre lesdites rainures, ou de modifier la largeur desdites rainures. Il est aussi connu, en vue d'améliorer le comportement d'un véhicule sur route sèche et/ou mouillée, de prévoir des taux d'entaillement différents entre les deux demi-bandes de roulement, tel que le mentionnent les demandes JP02/225103 et 57/147901. En dernier lieu, la combinaison des caractéristiques citées avec d'autres caractéristiques telles que, par exemple, l'orientation angulaire des rainures transversales, le nombre de blocs délimités par les rainures, et ainsi de suite, permet de concevoir des bandes de roulement de plus en plus spécialisées et compliquées.

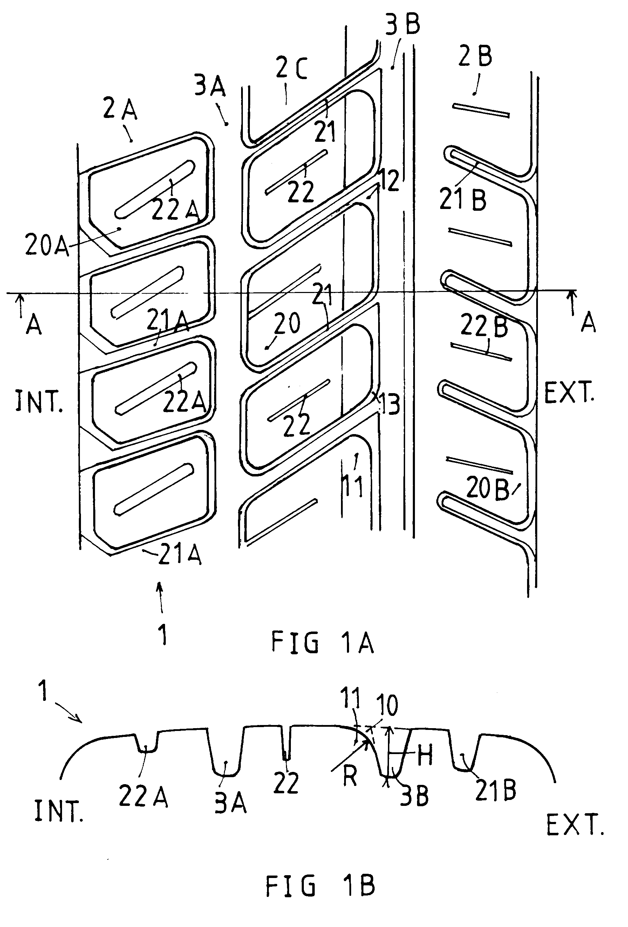

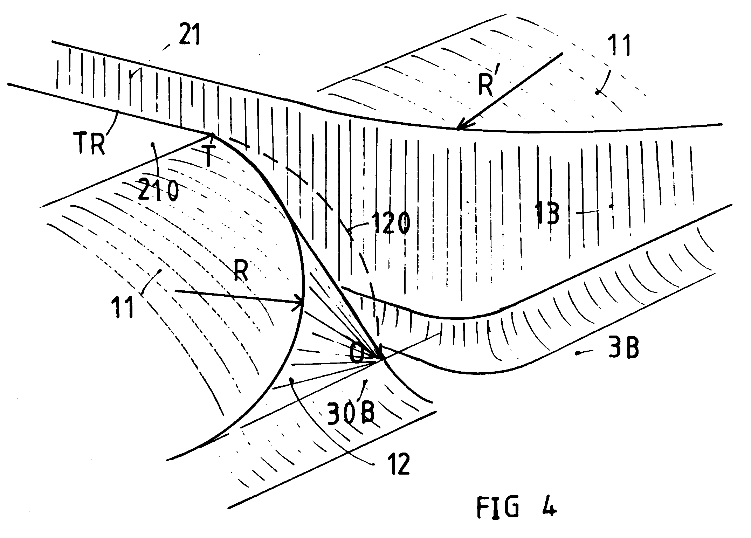

Le brevet USA 3768535 concerne une bande de roulement munie de rainures circonférentielles et/ou tranversales, dont une des parois est pratiquement perpendiculaire au sol et l'autre inclinée par rapport à une perpendiculaire audit sol. L'inclinaison peut-être remplacée par une troncature de la partie haute de la paroi, bien que cette variante ne soit pas préférée. Dans le cas de rainures transversales, et si l'on se réfère à la fig.4 dudit document. c'est la paroi de la rainure correspondant au bord de fuite de la nervure qui est inclinée ou tronquée. Dans le cas de rainures circonférentielles et si l'on se réfère à la fig.1, c'est la paroi la plus proche du côté extérieur de la bande de roulement qui est inclinée ou tronqueé.

En vue d'améliorer le comportement d'un véhicule, roulant en particulier sous des conditions de dérive importantes, l'invention propose une autre variante d'asymétrie. Un pneumatique, conforme à l'invention. comprend une bande de roulement comportant au moins deux rainures circonférentielles. délimitant au moins trois nervures, dont deux sont dites latérales, et l'(les) autre(s) centrale(s) et intermédiaires. Ladite bande de roulement est caractérisée en ce que l'arête formée par la surface d'au moins une nervure centrale ou intermédiaire et la paroi de la rainure circonférentielle. délimitant ladite nervure et la plus proche axialement du côté extérieur de la bande de roulement, est tronquée par une surface, ledit côté extérieur étant repéré par un marquage réalisé sur le flanc du pneumatique.

Il faut entendre par côté extérieur de la bande de roulement le côté de ladite bande axialement le plus éloigné du centre de gravité du véhicule sur lequel est monté le pneumatique ayant ladite bande.

La troncature peut se faire par une surface plane, et l'arête est alors dite chanfreinée. La troncature peut aussi se faire avantageusement par une surface courbe et on est alors en présence de congés de raccordement.

Conformément à l'invention et de manière préférentielle, la surface courbe assurant la liaison entre la surface de bande de roulement et la surface de la paroi de rainure circonférentielle concernée a vue dans un plan radial, un tracé circulaire tangent, d'une part au profil méridien de bande de roulement, d'autre part à la trace sur ledit plan de la paroi de la rainure. Le tracé circulaire de ladite surface de liaison a avantageusement un rayon de courbure compris entre 1 et 0,5 fois la profondeur de la rainure axialement adjacente. Les pneumatiques avec des bandes de roulement présentant de telles caractéristiques de courbure confèrent au véhicule équipé un meilleur placement dudit véhicule sur sa trajectoire en début de virage, ainsi qu'un enroulement en virage nettement plus progressif. On peut définir l'enroulement en virage d'un véhicule comme étant l'aptitude qu'a ledit véhicule à suivre sa trajectoire sans la nécessité de corrections permanentes au volant.

La (les) nervure(s) ayant leur(s) arête(s) tronquée(s) longitudinalement est (sont), dans la très grande majorité des cas, pourvue(s) de rainures transversales et/ou d'incisions débouchant ou non sur les rainures circonférentielles délimitant la ou lesdites nervures. De manière préférentielle, chaque nervure possédant une arête tronquée est munie de rainures transversales débouchant au moins sur la rainure circonférentielle axialement adjacente à l'arête. Il faut entendre par rainure transversale une rainure rectiligne ou pouvant être assimilée à une suite de segments rectilignes faisant avec la direction méridienne du pneumatique des angles compris entre 0° et 45°. Les coins de caoutchouc délimités par les parois respectivement des rainures circonférentielles et des rainures transversales sont alors avantageusement tronqués selon des surfaces tronconiques, ce qui permet en particulier une meilleure assise des coins de caoutchouc, délimités par les parois de rainures qui forment entre elles des angles aigus, pendant le roulage du véhicule sur sa trajectoire en virage.

Le comportement du véhicule en virage peut être encore amélioré si la nervure latérale extérieure de la bande de roulement présente un taux d' entaillement moindre que le taux d'entaillement de la nervure latérale intérieure de ladite bande. Le rapport du taux le plus élevé sur le plus faible est avantageusement compris entre 1 et 4, le taux le plus élevé restant compris entre 3% et 6%, le taux le plus faible restant compris entre 1% et 5%.

Le dessin et la partie de la description qui y fait référence illustrent des exemples non limitatifs d'application de l'invention. Sur ce dessin :
- la figure 1A représente schématiquement une bande de roulement vue par un observateur regardant ladite bande par le dessus,
- la figure 1B est une coupe méridienne de la bande de roulement de la figure 1A selon la ligne AA,
- les figures 2A et 2B correspondent à une deuxième variante conforme à l'invention,
- les figures 3A et 3B montrent une troisième variante conforme à l'invention,
- La figure 4 est une vue schématique en perspective de la jonction d'une rainure transversale et d'une rainure circonférentielle adjacente à une arête tronquée circonférentiellement.

La bande de roulement (1) des figures 1A et 1B comprend deux rainures circonférentielles et rectilignes (3A) et (3B) qui subdivisent ladite bande (1) en trois nervures (2A, 2B, 2C) de blocs (20A, 20) ou quasi-blocs (20B). La nervure latérale (2A) est située du côté intérieur, elle est la nervure la plus proche du centre de gravité du véhicule sur lequel sera monté un pneumatique avec une telle bande de roulement (1). La nervure latérale (2B) est la nervure dite extérieure, cette nervure ayant un taux d'entaillement inférieur au taux d'entaillement de la nervure latérale intérieure (2A) dans le rapport de 1 à 4. Il faut entendre par taux d'entaillement de la nervure le rapport de la surface entaillée de ladite nervure de ladite bande sur la surface totale de contact entre le pneumatique et le sol.

La nervure (2C) est délimitée axialement par deux rainures circonférentielles (3A) et (3B), est formée de blocs (20), séparés circonférentiellement entre eux par des rainures transversales (21) débouchant sur les deux rainures (3A) et (3B), et pourvus intérieurement d'une ou plusieurs incisions (22). L'arête (10), formée par la nervure centrale (2C) et la paroi de la rainure circonférentielle (3B), rainure délimitant ladite nervure et étant la plus proche axialement du côté extérieur de la bande de roulement, est tronquée par une surface cylindrique (11), ayant, vue en section méridienne (figure 1B),un rayon de courbure R, égal à 0,75 fois la profondeur H de la rainure (3B).

Les coins (12) et (13) de caoutchouc, délimités par les parois respectivement des rainures transversales (21) et de la rainure circonférentielle (3B) sont tronquées selon des surfaces tronconiques de mêmes références (12) et (13), (figure 4). La surface tronconique (12) est engendrée par la génératrice OT autour du point 0, ladite génératrice OT étant le segment de droite joignant le point de tangence T, de la trace TR sur la surface de bande de roulement de la paroi plane (210) de la rainure transversale (21) avec la courbe d'intersection (120) de la surface cylindrique (11), par laquelle a été tronquée l'arête (10) avec ladite paroi (210), au point de tangence O de ladite courbe d'intersection (120) avec la paroi (30B) de la rainure circonférentielle adjacente. La rotation de ladite génératrice OT est telle que la surface tronconique engendrée (12) forme avec la surface cylindrique (11) de troncature un arc de cercle de rayon égal à R. Il en est de même de la surface tronconique (13), à l'exception près que le rayon R' de l'arc de cercle formé par la surface tronconique (13) et la surface cylindrique (11) de troncature est très supérieur au rayon R. Dans le cas décrit le rayon R est égal à 5 mm, alors que le rayon R' lui est trois fois supérieur, c'est-à-dire égal à 15 mm

Dans la variante décrite, le taux d'entaillement inférieur de la nervure (2B) est obtenu principalement, d'une part par le fait que les rainures transversales (21B) ne débouchent que sur le bord extérieur de la bande de roulement alors que les rainures transversales (21A) de la nervure intérieure (2A) débouchent sur le bord intérieur de la bande de roulement et sur la rainure circonférentielle (3A), et d'autre part par le fait que les quasi-blocs (20B) sont pourvus d'incisions (22B) alors que les blocs (20A) sont pourvus à l'intérieur de rainures (22A) ayant une largeur environ égale à 4 fois la largeur d'une incision (22B). D'autres caractéristiques peuvent concourir à l'obtention d'une telle différence de taux d'entaillement, comme par exemple, les caractéristiques de jonction des parois des rainures latérales avec le bord de la bande de roulement : les coins de caoutchouc formés par les parois d'attaque (ou de fuite selon le sens de rotation) des rainures transversales (21A) de la nervure (2A) sont voluminiquement plus tronqués que les coins de caoutchouc formés par les parois d'attaque (ou de fuite) des rainures transversales (21B) de la nervure (2B).

Ladite combinaison de caractéristiques qui précèdent permet d'obtenir pour la nervure extérieure (2B) un taux d'entaillement de 2%, et pour la nervure intérieure un taux d'entaillement de 3,5%.

Lesdites fines rainures ou incisions, respectivement (22A),(22B), ne sont pas parallèles aux rainures transversales, respectivement (21A),(21B) des nervures (2A) et (2B), et font avec la direction circonférentielle un angle de 75°, inférieur à l'angle de 85° que font les rainures transversales avec ladite direction ; dans cet exemple la différence d'angle est égale à 10°.

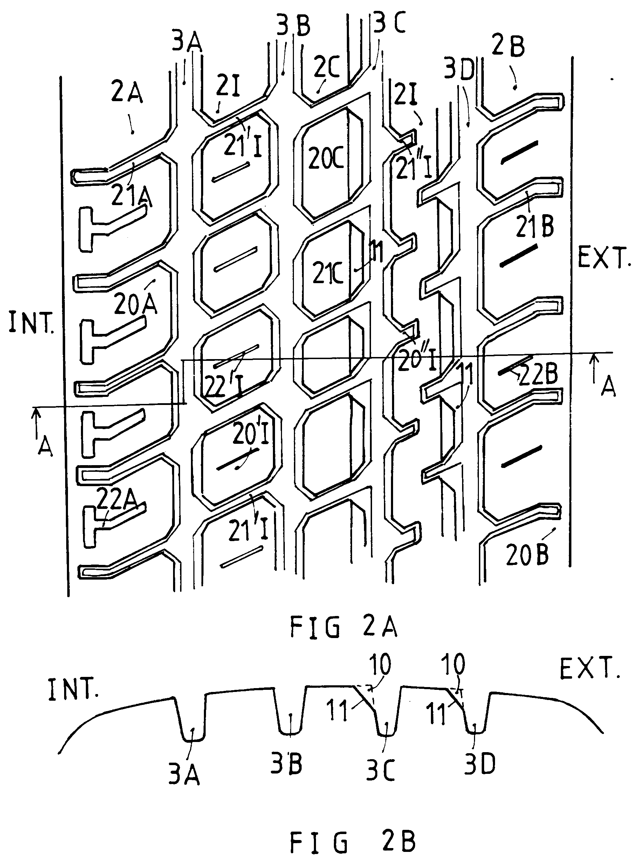

Les figures 2A et 2B représentent une deuxième variante qui se différencie de la précédente par les caractéristiques principales suivantes. La bande de roulement comprend quatre rainures circonférentielles (3A, 3B, 3C, 3D) délimitant avec ses bords cinq nervures : deux nervures latérales (2A, 2B), deux nervures (2I) dites intermédiaires, et une nervure centrale (2C). Conformément à l'invention, les arêtes formées respectivement par les surfaces des nervures centrale (2C) et intermédiaire (2I) et les parois des rainures les délimitant et les plus proches du bord extérieur de la bande de roulement du pneumatique, sont tronquées par une surface, qui est, dans le cas présent, une surface plane, comme montrée sur la figure 2B. Le taux d'entaillement de la nervure latérale extérieure (2B) est de la même façon plus faible que le taux correspondant de la nervure latérale intérieure (2A). L'asymétrie des taux d'entaillement est, dans cette deuxième variante, accentuée par le fait que le taux d'entaillement de la nervure intermédiaire (2I) la plus proche axialement du côté extérieur du pneumatique est aussi plus faible que le taux d'entaillement de la nervure intermédiaire (2I) la plus proche axialement du côté intérieur du pneumatique, les rainures transversales (21'I) de la nervure intermédiaire (2I) dite intérieure débouchant sur les deux rainures axialement adjacentes (3A) et (3B) et sont continues, alors que la nervure intermédiaire (2I) dite extérieure ne comprend que des quasi-rainures transversales (21''I) c'est-à-dire des rainures transversalement discontinues.

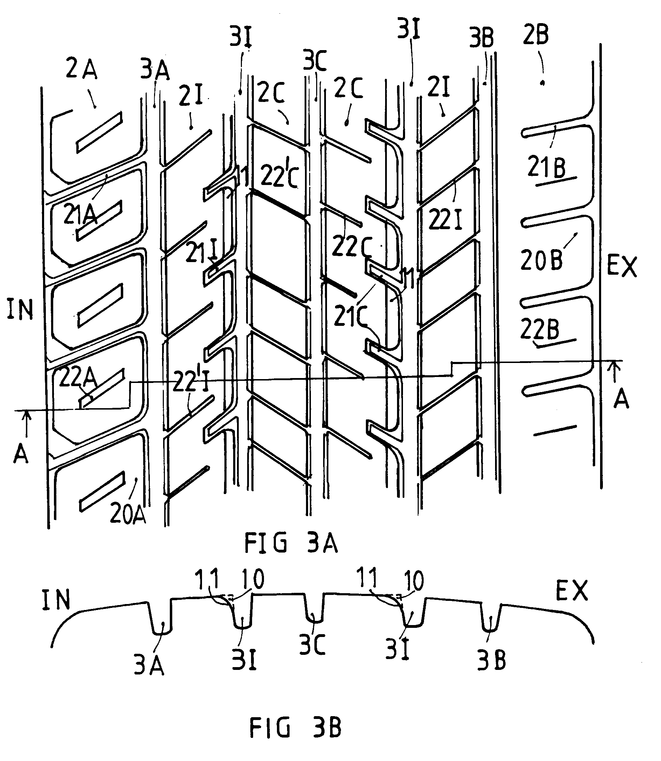

Les figures 3A et 3B montrent une variante de bande de roulement comprenant cinq rainures circonférentielles (3A, 3I, 3C, 3I, 3B) délimitant ainsi six nervures, deux nervures latérales (2A, 2B), deux nervures intermédiaires (2I) et deux nervures centrales (2C). Conformément à l'invention, d'une part l'arête formée par la surface de la nervure intermédiaire (2I) dite intérieure (la plus proche du côté intérieur) et la paroi de la rainure axialement adjacente dite intérieure (3I), la plus proche du bord extérieur de la bande de roulement du pneumatique, et d'autre part l'arête formée par la surface de la nervure centrale (2C), la plus proche du bord extérieur du pneumatique et la paroi de la rainure axialement adjacente dite extérieure (3I), la plus proche dudit bord extérieur du pneumatique, sont tronquées par une surface, qui est, comme dans le cas montré sur la figure 1A, une surface cylindrique (11), ayant, vue en section méridienne (figure 3B), un rayon de courbure R, égal à 0,75 fois la profondeur commune H des rainures (3I).

Comme dans le cas de la première variante décrite, les coins (12) et (13) de caoutchouc, délimités par les parois respectivement des quasi-rainures transversales (21I) et (21C) des rainures circonférentielles (3I) sont tronquées selon des surfaces tronconiques de mêmes références (12) et (13), (figure 4).

## Revendications

1. Bande de roulement (1) pour pneumatique, en particulier de tourisme, comportant au moins deux rainures circonférentielles (3A, 3B, 3I), délimitant au moins trois nervures (2A, 2B, 2C, 2I) dont deux sont dites latérales (2A, 2B), et l'(les) autre(s) (2C, 2I) centrale(s) et intermédiaires, caractérisée en ce que l'arête (10) formée par la surface d'au moins une nervure centrale (2C) ou intermédiaire (2I) et la paroi de la rainure circonférentielle (3B, 3C, 3I), délimitant axialement ladite nervure et la plus proche axialement du côté extérieur de la bande de roulement (1), est tronquée par une surface (11), ledit côté extérieur étant repéré par un marquage réalisé sur le flanc du pneumatique.

2. Bande de roulement selon la revendication 1, caractérisée en ce que la surface (11) est une surface plane.

3. Bande de roulement selon la revendication 1, caractérisée en ce que la surface (11) est courbe.

4. Bande de roulement selon la revendication 3, caractérisée en ce que la surface (11) est cylindrique, et a, vue dans un plan radial, un tracé circulaire tangent, d'une part au profil méridien de bande de roulement, d'autre part à la trace sur ledit plan de la paroi de la rainure.

5. Bande de roulement selon la revendication 4, caractérisée en ce que la tracé circulaire a un rayon de courbure R compris entre 1 et 0,5 fois la profondeur H de la rainure axialement adjacente.

6. Bande de roulement selon l'une des revendications 3 à 5, caractérisée en ce que, au moins chaque nervure (2C, 2I) possédant une arête (10) tronquée est munie de rainures transversales (21, 21''I, 21C, 21I) débouchant au moins sur la rainure circonférentielle (3B, 3C, 3I) axialement adjacente à l'arête.

7. Bande de roulement selon la revendication 6, caractérisée en ce que les coins (12) et (13) de caoutchouc, délimités par les parois respectivement des rainures transversales (21, 21C, 21I, 21''I) et des rainures circonférentielles (3B, 3C, 3I) sont tronquées selon des surfaces tronconiques (12) et (13).

8. Bande de roulement selon l'une des revendications 1 à 7, caractérisée en ce que la nervure latérale (2B) située du côté extérieur a un taux d' entaillement inférieur au taux d' entaillement de la nervure latérale située du côté intérieur (2A), le rapport du taux le plus élevé sur le plus faible étant avantageusement compris entre 1 et 4, le taux le plus élevé restant compris entre 3% et 6%, et le taux le plus faible restant compris entre 1% et 5%.

9. Bande de roulement selon l'une des revendications 3 à 5, caractérisée en ce qu'elle comprend cinq rainures circonférentielles (3A, 3I, 3C, 3I, 3B) délimitant ainsi six nervures, deux nervures latérales (2A, 2B), deux nervures intermédiaires (2I) et deux nervures centrales (2C).

## Claims

1. A tread (1) for a tyre, in particular a passenger car tyre, comprising at least two circumferential grooves (3A, 3B, 3I) defining at least three ribs (2A, 2B, 2C, 2I), two of which are lateral ribs (2A, 2B), and the other or others (2C, 2I) central and intermediate ribs, characterized in that the edge (10) formed by the surface of at least one central rib (2C) or intermediate rib (2I) and the wall of the circumferential groove (3B, 3C, 3I) axially defining said rib and closest axially to the outer side of the tread (1) is truncated by a surface (11), said outer side being indicated by a marking made on the sidewall of the tyre.

2. A tread according to Claim 1, characterized in that the surface (11) is a planar surface.

3. A tread according to Claim 1, characterized in that the surface (11) is curved.

4. A tread according to Claim 3, characterized in that the surface (11) is cylindrical and has, when seen in a radial plane, a circular trace which is tangent, on the one hand, to the meridian tread profile and, on the other hand, to the trace on said plane of the wall of the groove.

5. A tread according to Claim 4, characterized in that the circular trace has a radius of curvature R which is between 1 and 0.5 times the height H of the axially adjacent groove.

6. A tread according to one of Claims 3 to 5, characterized in that at least each rib (2C, 2I) which has a truncated edge (10) is provided with transverse grooves (21, 21''I, 21C, 21I) extending into at least the circumferential groove (3B, 3C, 3I) axially adjacent to the edge.

7. A tread according to Claim 6, characterized in that the rubber corners (12) and (13) defined by the walls of the transverse grooves (21, 21C, 21I, 21''I) and the circumferential grooves (3B, 3C, 3I), respectively, are truncated along frustoconical surfaces (12) and (13).

8. A tread according to one of Claims 1 to 7, characterized in that the lateral rib (2B) located on the outer side has a groove ratio less than the groove ratio of the lateral rib located on the inner side (2A), the ratio of the higher ratio to the lower ratio advantageously being between 1 and 4, the higher ratio being between 3% and 6% and the lower ratio being between 1% and 5%.

9. A tread according to one of Claims 3 to 5, characterized in that it comprises five circumferential grooves (3A, 3I, 3C, 3I, 3B), defining six ribs, namely two lateral ribs (2A, 2B), two intermediate ribs (2I), and two central ribs (2C).

## Patentansprüche

1. Lauffläche (1) für einen Luftreifen, insbesondere einen Tourenreifen, mit mindestens zwei Umfangsrillen (3A, 3B, 3I), die mindestens drei Rippen (2A, 2B, 2C, 2I) abgrenzen, von denen zwei seitliche Rippen (2A, 2B) und die andere(n) (2C, 2I) mittlere oder dazwischenliegende Rippe(n) genannt sind,
**dadurch gekennzeichnet, daß**
die Kante (10), die von der Oberfläche mindestens einer mittleren (2C) oder dazwischenliegenden (2I) Rippe und der Wand der Umfangsrille (3B, 3C, 3I) gebildet ist, die axial die genannte Rippe begrenzt und die axial der Außenseite der Lauffläche (1) nächstgelegen ist, durch eine Oberfläche (11) gebrochen ist, wobei die genannte Außenseite mit einer Markierung bezeichnet ist, die auf der Reifenflanke ausgebildet ist.

2. Lauffläche nach Anspruch 1, dadurch gekennzeichnet, daß die Fläche (11) eine ebene Fläche ist.

3. Lauffläche nach Anspruch 1, dadurch gekennzeichnet, daß die Fläche (11) gekrümmt ist.

4. Lauffläche nach Anspruch 3, dadurch gekennzeichnet, daß die Fläche (11) zylindrisch ist und, in einer Radialebene gesehen, eine kreisförmige Spur aufweist, die einerseits das Meridianprofil der Lauffläche und andererseits die Spur auf der genannten Ebene der Wand der Rille tangiert.

5. Lauffläche nach Anspruch 4, dadurch gekennzeichnet, daß die kreisförmige Spur einen Krümmungsradius R aufweist, der zwischen dem 1- und 0,5-fachen der Tiefe H der axial angrenzenden Nut liegt.

6. Lauffläche nach einem der Ansprüche 3 bis 5, dadurch gekennzeichnet, daß mindestens jede Rippe (2C, 2I), die eine gebrochene Kante (10) aufweist, mit Querrillen (21, 21''I, 21C, 21I) versehen ist, die mindestens in die Umfangsrille (3B, 3C, 3I) einmünden, die der Kante axial benachbart ist.

7. Lauffläche nach Anspruch 6, dadurch gekennzeichnet, daß die Keile (12) und (13) aus Gummi, die von den Wänden der Querrillen (21, 21C, 21I, 21''I) bzw. die Umfangsrillen (3B, 3C, 3I) begrenzt sind, längs kegelstumpfförmiger Flächen (12) und (13) gebrochen sind.

8. Lauffläche nach einem der Ansprüche 1 bis 7, dadurch gekennzeichnet, daß die seitliche Rippe (2B), die auf der Außenseite liegt, einen Einkerbungsgrad aufweist, der kleiner ist als der Einkerbungsgrad der seitlichen Rippe (2A), die auf der Innenseite gelegen ist, wobei das Verhältnis des höchsten Einkerbungsgrades zum niedrigsten vorteilhafterweise zwischen 1 und 4 liegt, sowie der höchste, noch verbleibende Einkerbungsgrad zwischen 3 % und 6 % und der niedrigste, noch verbleibende Einkerbungsgrad zwischen 1 % und 5 % liegt.

9. Lauffläche nach einem der Ansprüche 3 bis 5, dadurch gekennzeichnet, daß sie fünf Umfangsrillen (3A, 3I, 3C, 3I, 3B) aufweist, die somit sechs Rippen begrenzen, und zwar zwei seitliche Rippen (2A, 2B), zwei dazwischenliegende Rippen (2I) und zwei Mittelrippen (2C).
